# EUROPÄISCHE PATENTSCHRIFT

(11) **EP 2 189 237 B1**
(45) Veröffentlichungstag und Bekanntmachung des Hinweises auf die Patenterteilung: **23.01.2019**
(21) Anmeldenummer: 09175084.4
(22) Anmeldetag: 05.11.2009
(51) Int. Cl.: B41M 5/26

(54) **Verfahren zur Materialbearbeitung mit energiereicher Strahlung**
Method for processing material with energy-rich irradiation
Procédé de traitement de matériau avec un rayonnement riche en énergie

(30) Priorität: 21.11.2008 DE 102008058535
(43) Veröffentlichungstag der Anmeldung: 26.05.2010
(73) Patentinhaber: tesa SE, 22848 Norderstedt (DE)
(72) Erfinder: Koops, Arne, 23881 Neu-Lankau (DE); Reiter, Sven, 22049 Hamburg (DE)

(56) Entgegenhaltungen:
- DE-A1-102006 029 941
- DE-A1-102007 018 402
- DE-C1- 19 637 255
- FR-A1- 2 495 982
- US-A1- 2006 108 064
- US-A1- 2007 086 822

## Beschreibung

Die vorliegende Erfindung betrifft ein Verfahren zur Materialbearbeitung mit energiereicher Strahlung, wobei eine Polymermatrix mit energiereicher Strahlung, insbesondere mit einem Laserstrahl, bestrahlt wird.

Die Materialbearbeitung mit einem Laserstrahl ist ein etabliertes Verfahren in der Industrie und wird unter anderem zum Schweißen, Schneiden, Bohren und Abtragen verschiedener Werkstoffe eingesetzt. Die Vielzahl und Komplexität der beteiligten Wechselwirkungsmechanismen bei der Bearbeitung von Werkstoffen mit einem Laserstrahl sind Ursache dafür, dass die Anwendung eines Laserstrahls mit experimentell oder in einer Simulation erprobten Prozessparametern durchgeführt wird. Bei der Betrachtung des Parameterzusammenhangs in Bezug auf die Stellgrößen des eingesetzten Lasers und das resultierende Bearbeitungsergebnis sind die Laserintensität und die Einwirkdauer der Strahlung von besonderer Bedeutung.

Bei Materialbearbeitungen mittels Laser wird bekanntermaßen auf die Oberfläche eines zu bearbeitenden Werkstücks ein fokussierter Laserstrahl gelenkt. Es wird dabei typischerweise die Lage des Fokus so gewählt, dass der Abstand von der Fokussieroptik die kleinste radiale Ausdehnung des Laserstrahls relativ zur Werkstückoberfläche ermöglicht. Damit ist die Laserintensität an der Werkstückoberfläche am größten.

Ab einem bestimmten Verhältnis von Laserleistung zur Brennfleckausdehnung steigt die auf das Werkstück übertragene Energiedichte sprunghaft an. Resultierend durch die Einkopplung der Laserenergie werden Phasenumwandlungsvorgänge an der Werkstückoberfläche ausgelöst, die ein bestimmtes Bearbeitungsergebnis ermöglichen.

Im Bereich der Oberflächenbehandlung wird das Abtragen von Material von der Oberfläche eines Werkstücks durch Beschuss mittels eines gepulsten Laserstrahls als Laserablation bezeichnet.

Die auf das Werkstück übertragene Energie der Laserphotonen kann zum Aufbrechen chemischer Bindungen führen, bei Nichtmetallen kann es durch kurze Laserpulse auch zur Coulomb-Explosion kommen. Das bedeutet, dass die Elektronen den Festkörper verlassen und ein Teil der verbleibenden positiven Ionen durch Coulomb-Abstoßung aus der Oberfläche geschleudert werden.

Bei Laserpulsen im Nanosekundenbereich führt die Energie des Lasers zu einer Aufheizung der Oberfläche (im Sinne von thermischen Bewegungen der Atome) während des Laserpulses. Da die begrenzte Wärmeleitung nur einen langsamen Energietransport ins Volumen ermöglicht, wird die eingestrahlte Energie auf einen sehr kleinen Bereich konzentriert. Daher erreicht das Werkstück in diesem Bereich sehr hohe Temperaturen und es kann zum schlagartigen Verdampfen des Materials kommen. Durch thermische oder direkt durch Laserphotonen induzierte Ionisation kann bei hoher Leistungsdichte des Lasers ein Plasma aus Elektronen und Ionen des abgetragenen Materials entstehen, wobei die Ionen des Plasmas auf Energien bis über 100 eV beschleunigt werden können.

Die minimale Leistungs- oder Energiedichte, bei der (bei einer gegebenen Wellenlänge und Pulslänge) Ablation möglich ist, wird Ablationsschwelle genannt. Bei Energiedichten oberhalb dieser Schwelle steigt die Ablationsrate stark an.

Laserablation kann also zum gezielten Abtragen von Materialien verwendet werden, beispielsweise an Stelle von mechanischem Gravieren harter Materialien oder zum Bohren sehr kleiner Löcher. Alternativ kann das abgetragene Material auch zur Beschichtung einer Oberfläche eines anderen Werkstücks verwendet werden, wobei diese Techniken als Pulsed Laser Deposition (PLD) oder als Lasertransferfilm (LTF) bezeichnet werden.

Nachteilig an der Laserablation ist, dass sich während und kurz nach der Laserbestrahlung häufig fein aufgeworfene Schmelzen-Partikel, Ausspritzer und durch Abkühlung sowie Kondensation entstehende Substanzen als Debris um die Bearbeitungszone niederschlagen. Gegebenenfalls können diese Zersetzungsprodukte über Prozessgase von dem Bearbeitungsort entfernt werden. Generell handelt es sich jedoch um einen unerwünschten Effekt während der Laserprozessbearbeitung und ist häufig ein ausschlaggebender Faktor für die Qualität des Bearbeitungsergebnisses.

Über Laserparametereinstellungen und Reaktionen mit Prozessgasen wird üblicherweise versucht, diese Effekte zu minimieren. Bei vielen zu bearbeitenden Werkstoffen ist es über die Absorptionscharakteristik möglich, diese mit hohen Laserintensitäten in kurzer Zeit zu bestrahlen. Die höchste Einkopplung der Laserenergie wird üblicherweise dadurch erzielt, dass der Fokus des Lasers auf der Oberfläche des Werkstücks liegt. Dort kommt es durch Energieumwandlung der Strahlung in Wärme zu einer Ausbildung einer Wärmeeinflusszone, in der die thermischen Effekte zu dem gewünschten Bearbeitungsergebnis führen. Infolgedessen können aber starke thermische Prozesse durch Wärmeleitung, Konvektion sowie Verdampfung und Plasmabildung negative Auswirkungen in den umliegenden Bereichen erzeugen.

Im Falle einer schlechten Wärmeverteilung durch einen geringen werkstoffspezifischen Wärmeleitungskoeffizienten kann es zur Überhitzung an Grenzflächen und/oder umliegenden Bereichen kommen, die eine unerwünschte Strukturänderung des Werkstoffes nach sich ziehen. Insbesondere im Falle von amorphen und kristallinen Materialien, wie Glas, Keramik und kristallinen Metallen wie Silizium ist es problematisch, dass dieser hohe Energieeintrag zu negativen Effekten wie Spannungen und Rissen führen kann, welche die Qualität des zu bearbeitenden Materials beeinträchtigen.

Die bestmögliche Fokussierbarkeit für einen Laserstrahl liegt vor, wenn er im Grundmodus (TEM₀₀-Modus) schwingt und seine Intensitätsverteilung einer Gauss'schen Kurve folgt. Über entsprechende Gestaltung der Brennweite über die Fokussieroptik ist es möglich, kleinste Strahldurchmesser von 40 µm bis 120 µm zu erzielen und auf die Oberfläche des Werkstücks zu lenken. Es wird herkömmlicherweise dann die höchste Pulsleistungsdichte (J/cm²) des Laserstrahls auf das Werkstück gebracht, wenn der Fokus auf die Oberfläche des Werkstücks eingestellt ist. Liegt die Fokusebene des Laserstrahls nicht auf der Oberfläche des Werkstücks, kann die Pulsleistungsdichte zu gering sein, sodass der Laserstrahl die Oberfläche lediglich erwärmt, aber keine dauerhaften Veränderungen im Material hervorruft.

Übersteigt bei Fokussierung auf die Oberfläche die absorbierte Energie einen Schwellenwert, führt der Energieeintrag zu Phasenumwandlungen im Material. Die dadurch hervorgerufenen Veränderungen müssen zwar nicht zwangsläufig mit einer Änderung des Aggregatszustands des Materials einhergehen. Ein Aufheizen der Materialoberfläche bedingt jedoch eine Ausbildung eines Temperaturfeldes im Werkstück. Große Temperaturgradienten führen zu thermischen Spannungen, die nach der Abkühlphase häufig als Restspannung im Werkstück verbleiben. Mechanische Spannungen können aber auch durch plastische Verformungen (für Temperaturen unter 450 °C) in der Aufheizphase über Wärmeausdehnungen im Festkörper verbleiben. Die ausbildenden Strukturänderungen in der Wärmeeinflusszone können aber auch optisch sichtbare Defekte wie Kraterbildungen, Kavitäten und Mikrorisse hinterlassen.

Die DE 10 2007 018402 A1 betrifft ein Verfahren zum Einbringen einer Struktur (M) in eine Oberfläche (O) eines in einem bestimmten Wellenlängenbereich transparenten Werkstücks (W), bei dem die zu strukturierende Oberfläche (O) mit einer ein Targetmaterial enthaltenden Targetoberfläche (3) in Kontakt gebracht wird und mittels eines Laserstrahls (2), dessen Wellenlänge in dem bestimmten Wellenlängenbereich liegt, durch das Werkstück (W) hindurch zumindest an einer Position derart Energie in den Grenzbereich (G) der zu strukturierenden Oberfläche (O) des Werkstücks (W) und der Targetoberfläche (3) eingebracht wird, dass sich an der betreffenden Position Targetmaterial in und/oder auf der zu strukturierenden Oberfläche (O) ablagert.

Allen bekannten Verfahren zur Materialbearbeitung mit einem Laserstrahl ist es gemein, dass ein Laserstrahl auf die Oberfläche eines die Wellenlänge des Lasers absorbierenden Materials gerichtet wird, welches möglichst wenig durchlässig für das Licht ist. Daraus ergibt sich, dass das Licht nur eine geringe Eindringtiefe in das Material hat und die Wärmeeinflusszone maßgeblich durch die bestrahlte Oberfläche bestimmt ist. Durch die örtliche Begrenzung der Wärmeeinflusszone ist auch der absolute Energieübertrag auf das Material beschränkt. Außerdem ist auch die Menge des Materials, das sich pro Zeiteinheit abtragen lässt, davon abhängig, wie groß die Wärmeeinflusszone ist. Andererseits ist es häufig nicht wünschenswert, die bestrahlte Oberfläche zu vergrößern und dies mit einer erhöhten Laserleistung zu kompensieren, um die notwendige Pulsleistungsdichte zu erhalten. Dies hat seinen Grund darin, dass die Materialbearbeitung mit einem Laserstrahl häufig gerade dann Anwendung findet, wenn besonders genaue Bearbeitungsergebnisse erzielt werden sollen, z.B. bei besonders feinen oder mikroskopischen Schnitten, Bohrungen, Markierungen oder dergleichen.

Daher ist es die Aufgabe der vorliegenden Erfindung, ein verbessertes Verfahren zur Materialbearbeitung mit energiereicher Strahlung bereitzustellen, bei dem die Wärmeeinflusszone vergrößert wird, ohne das Bearbeitungsergebnis wesentlich zu beeinträchtigen.

Gelöst wird diese Aufgabe durch ein Verfahren gemäß Anspruch 1. Bevorzugte Ausführungsformen des erfindungsgemäßen Verfahrens sind Gegenstand der abhängigen Ansprüche.

Erfindungsgemäß ist vorgesehen, ein Verfahren zur Materialbearbeitung mit energiereicher Strahlung bereitzustellen,
wobei eine Polymermatrix mit energiereicher Strahlung, insbesondere mit einem Laserstrahl, bestrahlt wird, wobei die Strahlung auf einen Brennpunkt fokussiert und der Brennpunkt derart eingestellt wird, dass der Brennpunkt hinter der der Strahlung zugewandten Oberfläche der Polymermatrix liegt, und ein Materialabtrag an der Polymermatrix hervorgerufen wird und damit ein Reaktionsraum innerhalb der Polymermatrix erzeugt wird,
nach dem Materialabtrag in dem Reaktionsraum (13) Edukte (15, 17) vorliegen, wobei die Edukte (15, 17) bei der Erzeugung des Reaktionsraums (13) aus dem Material des Bereichs der Polymermatrix (1) gebildet werden, an dem der Reaktionsraum (13) erzeugt wurde, und die Edukte (15, 17) in dem Reaktionsraum (13) unter Bestrahlen des Reaktionsraumes (13) mit energiereicher Strahlung, insbesondere mit einem Laserstrahl (9), zu einem Produkt (19) reagieren,
der Reaktionsraum (13) räumlich sowohl durch die Polymermatrix (1) als auch durch ein in Kontakt mit der Polymermatrix (1) stehendes und für die Strahlungswellenlänge transparentes Werkstück (7), vorzugsweise ein Glassubstrat (7), begrenzt wird und die Strahlung das Werkstück (7) durchläuft, bevor sie auf die Polymermatrix (1) trifft,
sich das Produkt (19) unter Bestrahlen des Reaktionsraumes (13) mit energiereicher Strahlung, insbesondere mit einem Laserstrahl (9), auf dem in Kontakt mit der Polymermatrix (1) stehenden und für die Strahlungswellenlänge transparenten Werkstück (7) abscheidet.

Dabei kann das zu bearbeitende Material die Polymermatrix selbst oder ein in Kontakt mit der Polymermatrix stehendes und für die Strahlungswellenlänge transparentes Werkstück, vorzugsweise ein Glassubstrat, sein.

Als Polymermatrix wird vorliegend jede Matrix basierend auf polymeren Bestandteilen bezeichnet. Neben den polymeren Bestandteilen kann die Matrix auch beliebige nicht polymere Bestandteile enthalten, wobei lediglich der Hauptbestandteil polymerer Art sein sollte. Insbesondere bezeichnet der Begriff "Polymermatrix" auch eine Mischung von Grundpolymeren. In besonders bevorzugter Ausgestaltung handelt es sich bei der Polymermatrix um eine duroplastische Polymermatrix. Es hat sich gezeigt, dass insbesondere Duroplaste besonders geeignet sind, um einen Reaktionsraum zu erzeugen.

Durch das erfindungsgemäße Verfahren wird ein Materialabtrag an der Polymermatrix hervorgerufen, der dazu führt, dass sich ein Reaktionsraum ausbildet. Ein "Reaktionsraum" im Sinne der vorliegenden Erfindung ist eine Kavität, die dazu geeignet ist, Edukte für eine gewünschte Reaktion zu enthalten, die in dem Reaktionsraum stattfinden können. Diese Edukte werden bei der Erzeugung des Reaktionsraums aus dem Material des Bereichs der Polymermatrix gebildet, an dem der Reaktionsraum erzeugt wurde.

Durch die Erzeugung des Reaktionsraums wird die Wärmeeinflusszone vergrößert, ohne das Bearbeitungsergebnis wesentlich zu beeinträchtigen. Dies liegt daran, dass die Strahlung im Bereich des Reaktionsraums eine höhere Eindringtiefe hat als in einer Polymermatrix ohne Reaktionsraum. Vorzugsweise liegen nach der Erzeugung des Reaktionsraums Edukte in pulverisierter Form innerhalb des Reaktionsraums vor, wobei die Strahlung wesentlich stärker von den Edukten in pulverisierter Form im Reaktionsraum absorbiert wird als in gebundener Form in der Polymermatrix.

Es ist aus mehreren Gründen vorteilhaft, dass der Reaktionsraum räumlich sowohl durch die Polymermatrix als auch durch ein in Kontakt mit der Polymermatrix stehendes und für die Strahlungswellenlänge transparentes Werkstück, vorzugsweise ein Glassubstrat, begrenzt wird. Zum einen kann das Werkstück das eigentlich zu bearbeitende Material sein, das beispielsweise markiert oder beschriftet werden soll. Zum anderen ist dadurch der Reaktionsraum räumlich vollständig abgegrenzt und nicht zur Oberflächenebene der Polymermatrix hin offen. Dadurch können die Edukte den Reaktionsraum nicht verlassen und stehen sämtlich für eine gewünschte Reaktion nach der Erzeugung des Reaktionsraums im Reaktionsraum zur Verfügung. Nach dem Materialabtrag liegen in dem Reaktionsraum Edukte vorund die Edukte reagieren in dem Reaktionsraum unter Bestrahlen des Reaktionsraumes mit energiereicher Strahlung, insbesondere mit einem Laserstrahl, zu einem Produkt.

Die Polymermatrix kann zum Beispiel einen Titanspender sowie einen Kohlenstoffspender aufweisen. Als Titanspender dient dabei reines Titan oder eine Titanverbindung, die eine Affinität hat, unter Energieeinwirkung kurzzeitig freie Titanionen als Edukt bereitzustellen. Gegebenenfalls kann die Bereitstellung des freien Titans auch über den Weg eines titanhaltigen Zwischenprodukts erfolgen. Der Kohlenstoffspender stellt insbesondere unter Energieeinstrahlung freien Kohlenstoff bereit. Bei dem Kohlenstoffspender kann es sich um eine Kohlenstoffverbindung und/oder um freien, nicht gebundenen Kohlenstoff handeln. Der Kohlenstoffspender kann dabei durch die Polymermatrix selbst bereitgestellt werden, es kann aber auch eine zusätzliche Kohlenstoffkomponente, beispielsweise in Form von Ruß, vorhanden sein. Zudem kann die Polymermatrix auch weitere Komponenten wie zum Beispiel Polymere, Absorber etc. enthalten. Durch die Strahlung kommt es zum Bereitstellen der Edukte Titan und Kohlenstoff, beispielsweise durch ein Aufbrechen einer Titanverbindung sowie einer Kohlenstoffverbindung, und es bildet sich unter Einwirkung von Strahlung im Reaktionsraum als gewünschtes Produkt Titancarbid. Vorzugsweise wird bei lokaler Temperatur von 700°C bis 2200°C Titandioxid mit Ruß oder reinstem Graphit zu Titancarbid und Kohlenmonoxid reduziert. Die Strahlung bewirkt dabei die für die Reaktion notwendige Temperatur im Reaktionsraum.

Die Polymermatrix ist derart ausgebildet, dass sie auf die Laserbestrahlung überwiegend mit Pulverisierung reagiert, wodurch die einzelnen Edukte, insbesondere Titan und Kohlenstoff, freigesetzt werden und für die Reaktion zu Titancarbid zur Verfügung stehen.

Beispielsweise für die Markierung eines Werkstücks wie etwa eines Glassubstrats, scheidet sich das aus den Edukten entstehende Produkt, wie etwa Titancarbid, unter Bestrahlen des Reaktionsraumes mit energiereicher Strahlung, insbesondere mit einem Laserstrahl, auf dem in Kontakt mit der Polymermatrix stehenden Werkstück, wie etwa einem Glassubstrat, ab. Die Strahlung durchläuft dabei das für die Strahlungswellenlänge transparente Werkstück, bevor sie auf die Polymermatrix bzw. den Reaktionsraum trifft.

Vorzugsweise hat der Reaktionsraum eine räumliche Ausdehnung mit einem Durchmesser im Bereich von 20 - 200 µm und einer Tiefe im Bereich von 10 - 100 µm. Es hat sich gezeigt, dass optimale Ergebnisse mit einem Reaktionsraum mit einer räumlichen Ausdehnung mit einem Durchmesser von etwa 70 µm und einer Tiefe von etwa 40 µm erzielt werden. Dabei wurde als Strahlungsquelle ein fasergekoppelter diodenendgepumpter Laser mit einer Wellenlänge von 1060 nm oder 1064 nm eingesetzt, der eine Ausgangsleistung von 12 Watt hat.

In einer bevorzugten Ausführungsform des Verfahrens wird der Reaktionsraum durch einen ersten Laserpuls erzeugt und dann der Reaktionsraum mit einem zweiten Laserpuls bestrahlt. Der erste Laserpuls erzeugt also den Reaktionsraum und vorzugsweise darin vorliegende Edukte in pulverisierter Form und mittels eines zweiten Laserpulses wird die Reaktion der Edukte zu einem gewünschten Produkt befördert und vorzugsweise das Produkt durch explosionsartige Verdampfung auf die am Reaktionsraum angrenzende Oberfläche eines transparenten Werkstücks geschleudert.

Es kann weiterhin vorteilhaft sein, wenn mittels Bestrahlen der Polymermatrix mit energiereicher Strahlung, insbesondere mit einem Laserstrahl, eine Mehrzahl von örtlich nebeneinander angeordneten Reaktionsräumen innerhalb der Polymermatrix erzeugt wird. Vorzugsweise ist dabei die Strahlung ein gepulster Strahl und es wird während des Bestrahlens der gepulste Strahl relativ zur Polymermatrix oder die Polymermatrix relativ zum gepulsten Strahl seitlich verfahren. Es ist dabei von Vorteil, wenn sich dabei benachbarte Reaktionsräume mit mindestens 25% ihrer räumlichen Ausdehnung überlappen. Die Pulsfrequenz und die relative Bewegungsgeschwindigkeit zwischen Strahl und Polymermatrix, d.h. die Schreibgeschwindigkeit, sind dabei entsprechend aufeinander abgestimmt. Damit können zusammenhängende Strukturen, wie beispielsweise Linien oder Flächen von Reaktionsräumen ausgebildet werden. Dies kann insbesondere beim Markieren oder Beschriften von Werkstücken vorteilhaft sein.

Vorzugsweise wird die Strahlung mit einem gepulsten Laser und einer Pulsrate von 10 kHz - 300 kHz erzeugt. Eine hohe Pulsrate ist insbesondere dann vorteilhaft, wenn der Laserstrahl relativ zum Werkstück samt Polymermatrix und/oder das Werkstück samt Polymermatrix relativ zum Laserstrahl seitlich verfahren wird, um beispielsweise eine lineare oder flächige Markierung bzw. Beschriftung auf dem Werkstück zu erhalten. Es wird dann auch bei hohen Schreibgeschwindigkeiten eine Überdeckung der Laserpulse erreicht, um lineare oder flächige Strukturen von möglichst hoher Qualität auszubilden. Außerdem wird der Reaktionsraum bei höherer Pulsrate mehrfach mit Laserpulsen beaufschlagt, sodass mehr Strahlungsenergie eingekoppelt werden kann.

Beim erfindungsgemäßen Verfahren wird die Strahlung auf einen Brennpunkt fokussiert und der Brennpunkt der Strahlung derart eingestellt, dass der Brennpunkt hinter der der Strahlung zugewandten Oberfläche der Polymermatrix liegt. Dabei wird der Reaktionsraum vorzugsweise im Bereich des Brennpunkts erzeugt. Der Brennpunkt kann allerdings auch tiefer in der Polymermatrix liegen oder sogar hinter der Polymermatrix. Besonders bei einer den Reaktionsraum begrenzenden Werkstoffschicht kann es vorteilhaft sein, wenn der Brennpunkt derart eingestellt wird, dass die Strahlungsleistungsdichte an der Oberflächenebene der Polymermatrix weniger als 3 J/cm² beträgt. Die Oberflächenebene entspricht hierbei der Ebene entlang der Oberfläche der Polymermatrix vor Erzeugung des Reaktionsraums. Bei einem mit der Polymermatrix in Kontakt stehenden Werkstück entspricht dies der durch das Werkstück gebildeten Begrenzung des Reaktionsraums. Dadurch wird das Werkstück thermisch geschont, d.h. es kommt zu keiner dauerhaften Beeinträchtigung der Qualität des Werkstücks, sondern nur zu einer Erwärmung. Um gleichzeitig eine effektive Erzeugung des Reaktionsraums und eine gewünschte Reaktion zu erzielen, ist es von Vorteil, den Brennpunkt derart einzustellen, dass die maximale Strahlungsleistungsdichte innerhalb des Reaktionsraums mindestens 5 J/cm², vorzugsweise mindestens 10 J/cm², beträgt. Im Gegensatz zu bekannten Verfahren ist also am erfindungsgemäßen Verfahren vorteilhaft, dass eine bewusste Defokussierung eingestellt wird, d.h. der Brennpunkt wird gerade nicht auf die Werkstoffoberfläche eingestellt, sondern auf eine tiefere Ebene der Polymerschicht oder hinter die Polymermatrix.

Daraus ergibt sich, dass die maximale Pulsleistungsdichte, die sich in dem Brennpunkt des Laserstrahls befindet, nicht an der Grenzschicht lokalisiert ist. Damit wird sichergestellt, dass der maximale Energieeintrag von der Grenzschicht beabstandet in das Material eingebracht wird und sich thermisch nachteilige Effekte nicht auf ein angrenzendes Werkstück auswirken können.

Zudem wird durch die Defokussierung auch die Laserenergie für einen effizienten Umsatz der sich in der Kavität befindlichen Edukte gesorgt, da die Energieumwandlung direkt bei den in pulverisierter Form vorliegenden Edukten stattfindet.

Um herkömmlicherweise eine Materialbearbeitung mit möglichst hoher Ortsauflösung zu erzielen, wird typischerweise auf die Oberfläche des Werkstücks fokussiert bzw. die geringstmögliche Defokussierung eingestellt. Man spricht von einer negativen Defokussierung, wenn die Fokuslage vor der Oberfläche des Werkstücks liegt und von einer positiven Defokussierung, wenn die Fokuslage hinter der Oberfläche des Werkstücks liegt. Im Sinne der vorliegenden Erfindung ist daher eine positive Defokussierung einzustellen.

Durch die Defokussierung wird zwar eine Vergrößerung des Strahldurchmessers in der Ebene der Oberfläche der Polymermatrix bzw. eines damit in Kontakt stehenden Werkstücks bewirkt. Allerdings führt dies bei dem erfindungsgemäßen Verfahren nicht wie bei herkömmlichen Verfahren dazu, dass der Energieeintrag in das Material zu gering ist, sondern dazu, dass sich ein Reaktionsraum bildet, in den die Strahlung in tiefer liegende Ebenen Energie einbringen kann. Dies ist vorteilhaft, da die maximalen thermischen Effekte nicht an der Grenzschicht erzeugt werden, wo sie schädlich für ein angrenzendes Werkstück sein können.

Mit dem eingestellten Strahlquerschnitt werden Pulsleistungsdichten erzeugt, die eine kontrollierte Pulverisierung in den oberen Bereichen der Schicht erzeugt. Mit der stärkeren Ausbildung der Tiefe eines Hohlraums in der Matrix, wird erst die maximale Pulsleistungsdichte erreicht. Damit wird der maximale Energieeintrag nur in tiefere Ebenen eingebracht.

Die in der Kavität entstehenden Partikel werden dann größtenteils in dem tieferen Bereich des Kraters unmittelbar von der festen in die gasförmige Phase überführt. Die durch Depolymerisation entstandenen Edukte reagieren durch das Aufheizen zu den gewünschten Produkten und werden durch Expansion und/oder einen Gasstrahl mit hoher Geschwindigkeit aus dieser Wechselwirkungszone geblasen und treffen auf die Glasoberfläche. Damit dient diese Wechselwirkungszone als lokal begrenzter Reaktionsraum, in dem der Laserstrahl nahezu vollständig in thermische Energie umgesetzt wird.

Mit dem erfindungsgemäßen Verfahren ist eine schädigende Wirkung auf das Glassubstrat, wie Spannungen, Risse und Verdampfungen, die durch thermische Effekte entstehen, auszuschließen. Bei der Verwendung des Verfahrens zur Markierung oder Beschriftung eines Glassubstrats wird über die Defokussierung lediglich in vernachlässigbarer Weise die Kantenschärfe bei der abgeschiedenen Markierung oder Beschriftung verringert.

Im Folgenden wird ein vorteilhaftes Ausführungsbeispiel anhand der beiliegenden Figuren näher erläutert.

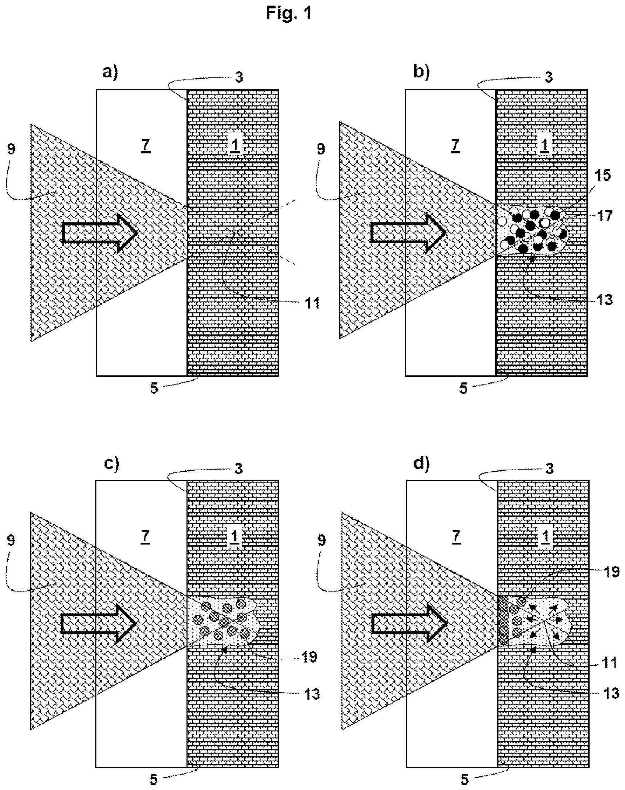

Figuren 1a bis 1d zeigen verschiedene Stadien einer erfindungsgemäßen Erzeugung eines Reaktionsraums in einer Polymermatrix, die in Kontakt mit einem Glassubstrat steht.

In Figur 1a ist eine Polymermatrix 1 gezeigt, dessen ebene Oberfläche 3 in direktem Kontakt mit einer ebenen Oberfläche 5 eines Glassubstrats 7 steht. Energiereiche Strahlung in Form eines fokussierten und gepulsten Laserstrahls 9 wird durch das Glassubstrat 7 hindurch auf die Oberfläche 3 der Polymermatrix 1 gerichtet. Das Glassubstrat 7 ist für die Wellenlänge der Strahlung transparent, wogegen die Polymermatrix 1 die Strahlung nahezu vollständig absorbiert. Der in Figur 1a virtuelle Brennpunkt 11 des Laserstrahls 9 ist derart eingestellt, dass er beabstandet von der ebenen Oberfläche 3 der Polymermatrix 1 bzw. von der ebenen Oberfläche 5 des Glassubstrats 7 liegt, und zwar hinter der ebenen Oberfläche 3 der Polymermatrix 1 im Innern der Polymermatrix 1, womit eine positive Defokussierung erreicht wird. Um dies zu verdeutlichen, ist der virtuelle Brennpunkt 11 in Figur 1a mit gestrichelten Linien angedeutet. Die Stärke der Fokussierung des Laserstrahls 9 ist zur Verdeutlichung übertrieben dargestellt. Auf die Oberfläche 3 trifft also nicht die maximale Pulsleistungsdichte, sondern nur eine Pulsleistungsdichte von weniger als 3 J/cm², da wegen der positiven Defokussierung die bestrahlte Fläche größer ist als sie am Brennpunkt 11 wäre. Durch die Pulsleistungsdichte von weniger als 3 J/cm² wird das anliegende Glassubstrat 7 und dessen Oberfläche 5 geschont und keinem schädigenden thermischen Einfluss ausgesetzt. Die Polymermatrix 1 hingegen absorbiert die energiereiche Strahlung im Bereich der Oberfläche 3 und heizt sich auf bis die thermische Energie so groß ist, dass die Polymermatrix 1 pulverisiert. Der pulverisierte Bereich der Polymermatrix 1 ist für die Strahlung zumindest teilweise transparent. Im Zuge der Pulverisierung im Bereich der Oberfläche 3 erreicht der Laserstrahl 9 daher eine größere Eindringtiefe und somit tiefer liegende Bereiche. Der Laserstrahl 9 ist dabei wegen der positiven Defokussierung in den tiefer liegenden Bereichen stärker fokussiert und hat somit eine höhere Pulsleistungsdichte, die auf das Material der Polymermatrix 1 übertragen wird. Dieser Prozess setzt sich im Rahmen der Einwirkdauer des Laserstrahls 9 bis zum Brennpunkt 11 und darüber hinaus fort, sodass ein Reaktionsraum 13 entsteht. Die notwendige Einwirkdauer zur Erzeugung des Reaktionsraums 13 kann der Dauer eines ersten Pulses des Laserstrahls 9 entsprechen.

In Figur 1b hat der Reaktionsraum 13 seine erforderliche Größe erreicht und eine maximale Pulsleistungsdichte von mehr als 10 J/cm² herrscht innerhalb des Reaktionsraums 13. Der in Figur 1a noch virtuelle Brennpunkt 9 ist in Fig. 1b ein reeller Brennpunkt 9 innerhalb des Reaktionsraums 13 geworden. Dies ist nicht notwendigerweise erforderlich, da die Größe des Reaktionsraums 13 durch die Einwirkdauer des Laserstrahls eingestellt werden kann. Der Brennpunkt 9 kann für das gesamte Verfahren auch virtuell bleiben und sogar außerhalb bzw. hinter der Polymermatrix 1 liegen. Innerhalb des Reaktionsraums 13 liegen im pulverisierten Material Edukte 15, 17 vor, die für eine gewünschte Reaktion bereitstehen. Die Edukte 15, 17 sind in diesem Beispiel Titandioxid 15 und reiner Kohlenstoff 17 in Form von Ruß.

Figur 1c zeigt ein Stadium des bevorzugten Ausführungsbeispiels, in dem die Edukte 15, 17 unter weiterer Einwirkung der Strahlung, beispielsweise durch einen zweiten Puls des Laserstrahls 9, zu einem Produkt 19 reagiert haben. Im vorliegenden Fall ist das Titandioxid 15 mit dem reinen Kohlenstoff 17 bei einer durch die Strahlung erzeugten lokalen Temperatur von 700°C bis 2200°C im Reaktionsraum 13 zu Titancarbid 19 als Produkt reduziert.

Wie in Figur 1d gezeigt, wird mit der weiteren Einwirkung der Strahlung in Form eines zweiten Pulses des Laserstrahls 9 eine explosionsartige Verdampfung des pulverisierten Materials innerhalb des Reaktionsraums 13 erzeugt. Dabei wird das produzierte Titancarbid 19 auf die Oberfläche 5 des Glassubstrats 7 geschleudert, wo sich das Titancarbid 19 abscheidet. Das auf dem Glassubstrat 7 abgeschiedene Titancarbid 19 kann beispielsweise als Markierung oder Beschriftung des Glassubstrats 7 dienen.

## Patentansprüche

1. Verfahren zur Materialbearbeitung mit energiereicher Strahlung, wobei
eine Polymermatrix (1) mit energiereicher Strahlung, insbesondere mit einem Laserstrahl (9), bestrahlt wird, wobei die Strahlung auf einen Brennpunkt (11) fokussiert und der Brennpunkt (11) derart eingestellt wird, dass der Brennpunkt (11) hinter der der Strahlung zugewandten Oberfläche (3) der Polymermatrix (1) liegt, und ein Materialabtrag an der Polymermatrix (1) hervorgerufen wird und damit ein Reaktionsraum (13) innerhalb der Polymermatrix (1) erzeugt wird,
nach dem Materialabtrag in dem Reaktionsraum (13) Edukte (15, 17) vorliegen, wobei die Edukte (15, 17) bei der Erzeugung des Reaktionsraums (13) aus dem Material des Bereichs der Polymermatrix (1) gebildet werden, an dem der Reaktionsraum (13) erzeugt wurde, und die Edukte (15, 17) in dem Reaktionsraum (13) unter Bestrahlen des Reaktionsraumes (13) mit energiereicher Strahlung, insbesondere mit einem Laserstrahl (9), zu einem Produkt (19) reagieren,
der Reaktionsraum (13) räumlich sowohl durch die Polymermatrix (1) als auch durch ein in Kontakt mit der Polymermatrix (1) stehendes und für die Strahlungswellenlänge transparentes Werkstück (7), vorzugsweise ein Glassubstrat (7), begrenzt wird und die Strahlung das Werkstück (7) durchläuft, bevor sie auf die Polymermatrix (1) trifft,
sich das Produkt (19) unter Bestrahlen des Reaktionsraumes (13) mit energiereicher Strahlung, insbesondere mit einem Laserstrahl (9), auf dem in Kontakt mit der Polymermatrix (1) stehenden und für die Strahlungswellenlänge transparenten Werkstück (7) abscheidet.

2. Verfahren nach Anspruch 1, wobei der Reaktionsraum (13) derart erzeugt wird, dass der Reaktionsraum (13) eine räumliche Ausdehnung mit einem Durchmesser im Bereich von 20 - 200 µm, vorzugsweise etwa 70 µm, und einer Tiefe im Bereich von 10 - 100 µm, vorzugsweise etwa 40 µm, aufweist.

3. Verfahren nach Anspruch 1 oder 2, wobei der Reaktionsraum (13) durch einen ersten Puls eines gepulsten Laserstrahls (9) erzeugt wird und der Reaktionsraum (13) mit einem zweiten Puls eines gepulsten Laserstrahls (9) bestrahlt wird.

4. Verfahren nach einem der vorhergehenden Ansprüche 1 bis 3, wobei mittels Bestrahlen der Polymermatrix (1) mit energiereicher Strahlung, insbesondere mit einem Laserstrahl (9), eine Mehrzahl von örtlich nebeneinander angeordneten Reaktionsräumen (13) innerhalb der Polymermatrix (1) erzeugt wird.

5. Verfahren nach Anspruch 4, wobei die Strahlung ein gepulster Laserstrahl (9) ist und während des Bestrahlens der gepulste Laserstrahl (9) relativ zur Polymermatrix (1) oder die Polymermatrix (1) relativ zum gepulsten Laserstrahl (9) seitlich verfahren wird.

6. Verfahren nach Anspruch 4 oder 5, wobei die Reaktionsräume (13) derart erzeugt werden, dass sich benachbarte Reaktionsräume (13) mit mindestens 25% ihrer räumlichen Ausdehnung überlappen.

7. Verfahren nach einem der vorhergehenden Ansprüche, wobei die Strahlung mit einem gepulsten Laser (9) und einer Pulsrate von 10 - 300 kHz erzeugt wird.

8. Verfahren nach einem der vorhergehenden Ansprüche, wobei der Brennpunkt (11) im Reaktionsraum (13), in der Polymermatrix (1) oder hinter der Polymermatrix (1) liegt.

9. Verfahren nach einem der vorhergehenden Ansprüche, wobei der Brennpunkt (11) derart eingestellt wird, dass die Strahlungsleistungsdichte an der Oberfläche (3) der Polymermatrix (1) weniger als 3 J/cm² beträgt.

10. Verfahren nach einem der vorhergehenden Ansprüche, wobei der Brennpunkt (11) derart eingestellt wird, dass die maximale Strahlungsleistungsdichte innerhalb des Reaktionsraums (13) mindestens 5 J/cm², vorzugsweise mindestens 10 J/cm², beträgt.

11. Verwendung des Verfahrens nach einem der Ansprüche 1 bis 10 zur Markierung oder Beschriftung eines für die Strahlungswellenlänge transparenten Werkstücks (7).

## Claims

1. Method of working material with high-energy radiation, wherein a polymer matrix (1) is irradiated with high-energy radiation, in particular with a laser beam (9), wherein the radiation is focused onto a focal point (11) and the focal point (11) is set such that the focal point (11) lies behind the surface (3) of the polymer matrix (1) facing the radiation, and material removal is brought about at the polymer matrix (1), and consequently a reaction space (13) is created within the polymer matrix (1), reactants (15, 17) are present in the reaction space (13) after the removal of material, wherein the reactants (15, 17) are formed during the creation of the reaction space (13) from the material of the region of the polymer matrix (1) at which the reaction space (13) has been created, and the reactants (15, 17) in the reaction space (13) react under irradiation of the reaction space (13) with high-energy radiation, in particular with a laser beam (9), to form a product (19),
the reaction space (13) is spatially bounded by the polymer matrix (1) and by a workpiece (7) that is in contact with the polymer matrix (1) and is transparent to the radiation wavelength, preferably a glass substrate (7), and the radiation passes through the workpiece (7) before it impinges on the polymer matrix (1),
the product (19) is deposited on the workpiece (7) that is in contact with the polymer matrix (1) and is transparent to the radiation wavelength when the reaction space (13) is irradiated with high-energy radiation, in particular with a laser beam (9) .

2. Method according to Claim 1, wherein the reaction space (13) is created such that the reaction space (13) has a spatial extent with a diameter in the range of 20 - 200 µm, preferably approximately 70 µm, and a depth in the range of 10 - 100 µm, preferably approximately 40 µm.

3. Method according to Claim 1 or 2, wherein the reaction space (13) is created by a first pulse of a pulsed laser beam (9) and the reaction space (13) is irradiated with a second pulse of a pulsed laser beam (9).

4. Method according to one of the preceding Claims 1 to 3, wherein a plurality of reaction spaces (13) arranged locally next to one another are created within the polymer matrix (1) by means of irradiating the polymer matrix (1) with high-energy radiation, in particular with a laser beam (9) .

5. Method according to Claim 4, wherein the radiation is a pulsed laser beam (9) and, during the irradiation, the pulsed beam (9) is made to move laterally in relation to the polymer matrix (1) or the polymer matrix (1) is made to move laterally in relation to the pulsed beam (9).

6. Method according to Claim 4 or 5, wherein the reaction spaces (13) are created such that neighbouring reaction spaces (13) overlap by at least 25% of their spatial extent.

7. Method according to one of the preceding claims, wherein the radiation is generated with a pulsed laser (9) and a pulse rate of 10 kHz - 300 kHz.

8. Method according to one of the preceding claims, wherein the focal point (11) lies in the reaction space (13), in the polymer matrix (1) or behind the polymer matrix (1).

9. Method according to one of the preceding claims wherein the focal point (11) is set such that the radiation power density at the surface (3) of the polymer matrix (1) is less than 3 J/cm².

10. Method according to one of the preceding claims, wherein the focal point (11) is set such that the maximum radiation power density within the reaction space (13) is at least 5 J/cm², preferably at least 10 J/cm².

11. Use of the method according to one of Claims 1 to 10 for marking or inscribing a workpiece (7) transparent to the radiation wavelength.

## Revendications

1. Procédé de traitement de matériaux par un rayonnement à haute énergie, dans lequel
une matrice polymère (1) est exposée à un rayonnement à haute énergie, en particulier à un faisceau laser (9), dans lequel le rayonnement est focalisé sur un point focal (11) et le point focal (11) est réglé de manière à ce que le point focal (11) se situe à l'arrière de la surface (3) de la matrice polymère (1) faisant face au rayonnement et un enlèvement de matériau est provoqué dans la matrice polymère (1) de manière à ce qu'un espace réactionnel (13) soit créé à l'intérieur de la matrice polymère (1),
après l'enlèvement de matériau, des produits de départ (15, 17) sont présents dans l'espace réactionnel (13), dans lequel les produits de départ (15, 17) sont formés pendant la création de l'espace réactionnel (13) à partir du matériau de la région de la matrice polymère (1) sur laquelle l'espace réactionnel (13) a été créé, et les produits de départ (15, 17) réagissent dans l'espace réactionnel (13) pour donner un produit (19) par exposition de l'espace réactionnel (13) à un rayonnement à haute énergie, notamment à un faisceau laser (9),
l'espace réactionnel (13) est délimité spatialement à la fois par la matrice polymère (1) et par une pièce (7), de préférence un substrat en verre (7), qui est en contact avec la matrice polymère (1) et est transparente à la longueur d'onde de rayonnement, et le rayonnement passe à travers la pièce (7) avant d'atteindre la matrice polymère (1),
le produit (19) se dépose sur la pièce (7) qui est en contact avec la matrice polymère (1) et est transparente à la longueur d'onde de rayonnement, par exposition de l'espace réactionnel (13) à un rayonnement à haute énergie, notamment à un faisceau laser (9).

2. Procédé selon la revendication 1, dans lequel l'espace réactionnel (13) est créé de manière à ce que l'espace réactionnel (13) ait une extension spatiale présentant un diamètre compris entre 20 et 200 µm, de préférence d'environ 70 µm, et présentant une profondeur comprise entre 10 et 100 µm, de préférence d'environ 40 µm.

3. Procédé selon la revendication 1 ou 2, dans lequel l'espace réactionnel (13) est créé par une première impulsion d'un faisceau laser pulsé (9) et l'espace réactionnel (13) est exposé à une seconde impulsion d'un faisceau laser pulsé (9).

4. Procédé selon l'une des revendications précédentes 1 à 3, dans lequel une pluralité d'espaces réactionnels (13) disposés spatialement les uns à côté des autres dans la matrice polymère (1) sont créés par exposition de la matrice polymère (1) à un rayonnement à haute énergie, notamment à un faisceau laser (9).

5. Procédé selon la revendication 4, dans lequel le rayonnement est un faisceau laser pulsé (9) et pendant l'exposition, le faisceau laser pulsé (9) est déplacé latéralement par rapport à la matrice polymère (1) ou la matrice polymère (1) est déplacée latéralement par rapport au faisceau laser pulsé (9).

6. Procédé selon la revendication 4 ou 5, dans lequel les espaces réactionnels (13) sont créés de manière à ce que des espaces réactionnels adjacents (13) se chevauchent sur au moins 25% de leur extension spatiale.

7. Procédé selon l'une des revendications précédentes, dans lequel le rayonnement est généré au moyen d'un laser pulsé (9) et avec une fréquence de répétition d'impulsions de 10 à 300 kHz.

8. Procédé selon l'une des revendications précédentes, dans lequel le point focal (11) se situe dans l'espace réactionnel (13), dans la matrice polymère (1) ou à l'arrière de la matrice polymère (1).

9. Procédé selon l'une des revendications précédentes, dans lequel le point focal (11) est réglé de manière à ce que la densité de puissance de rayonnement sur la surface (3) de la matrice polymère (1) soit inférieure à 3 J/cm².

10. Procédé selon l'une des revendications précédentes, dans lequel le point focal (11) est réglé de manière à ce que la densité de puissance de rayonnement maximale dans l'espace réactionnel (13) soit d'au moins 5 J/cm² et de préférence d'au moins 10 J/cm².

11. Utilisation du procédé selon l'une des revendications 1 à 10 pour réaliser un marquage ou une inscription sur une pièce (7) transparente à la longueur d'onde de rayonnement.
